# EUROPÄISCHE PATENTANMELDUNG

(11) **EP 4 685 594 A1**
(43) Veröffentlichungstag der Anmeldung: **28.01.2026**
(21) Anmeldenummer: 24190540.5
(22) Anmeldetag: 24.07.2024
(51) Int. Cl.: G05B 23/02

(54) **GANZHEITLICHES ALARMMANAGEMENT FÜR EIN LEITSYSTEM FÜR EINE TECHNISCHE ANLAGE**

(71) Anmelder: Siemens Aktiengesellschaft, 80333 München (DE)
(72) Erfinder: Lutz, Benjamin, 76327 Pfinztal (DE)
(74) Vertreter: Siemens Patent Attorneys

(57) **Zusammenfassung**

Die Erfindung betrifft ein Leitsystem (11) für eine technische Anlage, insbesondere Fertigungs- oder Prozessanlage, das ein computerimplementiertes Alarmsystem (31) umfasst, welches zur Überwachung von technischen Objekten (25) hinsichtlich vorgebbarer Kriterien und zur Erzeugung von Alarmmeldungen bezüglich der überwachten technischen Objekte (25) ausgebildet ist, wobei in dem Alarmsystem von vorgebbar ist, dass ein technisches Objekt (25) oder eine Mehrzahl von technischen Objekten (25) beim Erfüllen einer oder mehrerer vorgegebener Bedingungen für die Erzeugung der Alarmmeldungen ausgenommen werden.

Das Leitsystem (11) ist dadurch gekennzeichnet, dass es dazu ausgebildet ist, bei einem Erfüllen der einen oder mehreren vorgegebenen Bedingungen zusätzlich Dokumente, die in einem Zusammenhang mit dem von der erzeugten Alarmmeldung betroffenen technischen Objekt (25) stehen und die für eine visuelle Darstellung für einen Operator des Leitsystems (11) im Rahmen einer Bedienung und Beobachtung der technischen Anlage vorgesehen sind, von der Bedienung durch den Operator zur Laufzeit der technischen Anlage auszuschließen.

## Beschreibung

Die Erfindung betrifft ein Leitsystem für eine technische Anlage, insbesondere Fertigungs- oder Prozessanlage. Außerdem betrifft die Erfindung ein Verfahren zum Betrieb einer technischen Anlage, insbesondere Fertigungs- oder Prozessanlage, und ein Verfahren.

Für die Bedienung und Beobachtung verfahrenstechnischer Anlagen werden symbolische Anlagenbilder erstellt, die die verfah-renstechnischen Zusammenhänge - insbesondere zwischen einzelnen Prozessobjekten - abstrahiert darstellen. Anlagenbilder setzen sich dabei aus statischen Symbolen (z.B. Leitungen, Rechtecke, usw.), dynamisierten Symbolen (z.B. in Abhängigkeit von Prozesswerten Leitungen mit Farbumschlag, Rechtecke mit Füllständen, usw.), Blocksymbolen (zur dynamisierten Visualisierung verfahrenstechnischer Prozessobjekte), komplexen Controls (z.B. Trendanzeigen, Meldefolgeanzeigen, usw.) und Containern, um Inhalte aus unabhängigen und eigenständigen Quellen visualisieren zu können (z.B. Webcams, Anlagenbilder modularer Anlagenteile, oder Applikationen wie einen Regleroptimierer oder KPI-Berechnungen), zusammen.

Anlagenbilder werden in Operator Station Clients visualisiert und wie die für die Dynamisierung notwendigen Prozesswerte und Prozessalarme über deren Prozessabbilder durch Operator Station Server bereitgestellt. Für die Bedienung und Beobachtung von insbesondere verfah-renstechnischen Anlagen durch Operatoren ist ein effizientes Alarmmanagement zur Behandlung von aktiven Alarmen, aber auch zur proaktiven Vermeidung dieser Alarme von zentraler Bedeutung. Obgleich in verfahrenstechnischen Anlagen kontinuierliche Prozesse automatisiert werden, können sich diese in unterschiedlichen Zuständen befinden. Solche Zustände sind beispielsweise: "in der Anfahrt", "in der Abfahrt", "in einem Produktwechsel" (modulare Anlagenteile werden ausgetauscht)", "in der Wartung" oder "in einer Teilabschaltung".

Diese Zustände werden im Alarmmanagement berücksichtigt, um beispielsweise unnötige Alarme für Anlagenteile, die vorsätzlich heruntergefahren worden sind, nicht zu melden. So werden die Operatoren nicht von der Behandlung der tatsächlich relevanten Alarme abgelenkt. Diese proaktive Unterdrückung von Alarmen in Abhängigkeiten des Anlagenzustandes kann über das so genannte "Alarm Suppression By Design (ASBD)" automatisch erfolgen, sofern dieses entsprechend projektiert wurde.

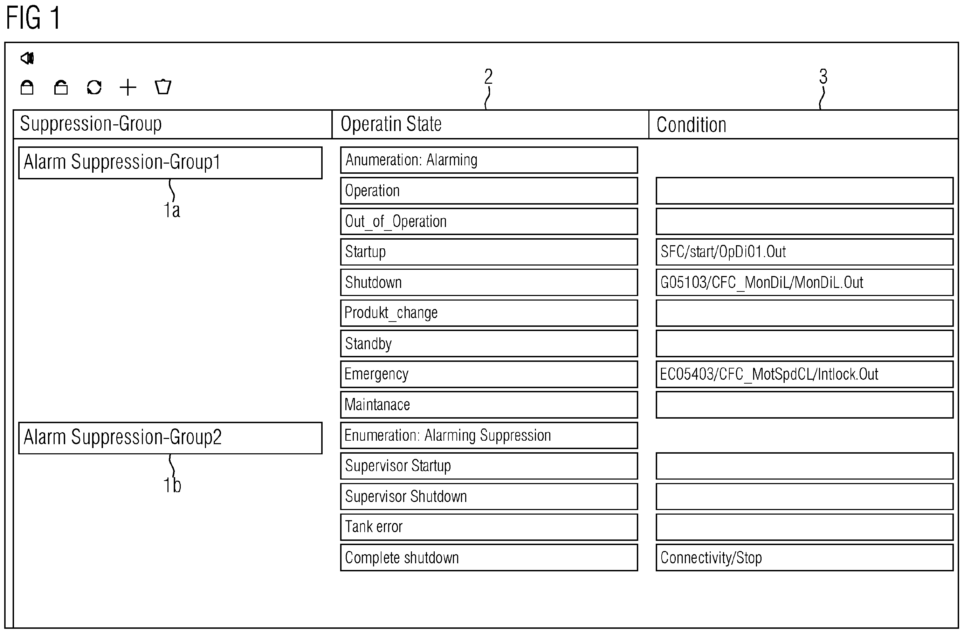

Die Figuren 1 bis 3 zeigen ein Ausführungsbeispiel einer solchen Projektierung eines ASBD eines Alarmsystems eines Leitsystems nach dem Stand der Technik. In einem ersten Schritt werden, wie in FIG 1 dargestellt, im Rahmen einer Erzeugung einer Automatisierung der technischen Anlage (auch als Projektierungs- oder Engineeringphase bezeichnet) von einem Projekteur verschiedene Alarmunterdrückungsgruppen (Alarm Suppression Groups 1 und 2) 1a, 1b mit den jeweils relevanten Zuständen 2 (als abschließende Aufzählung) mittels eines entsprechend hierfür ausgelegten Dienstes eines Engineering Station Servers eines Leitsystems angelegt. In FIG 1 sind dies die Zustände: "Operation" (Betrieb), "Out_of_Operation" (Außer Betrieb), "Startup" (Anlauf), "Shutdown" (Abschaltung), "Product_change" (Produktwechsel), "Standby" (Warten), "Emergency" (Notfall) und "Maintenance" (Wartung).

Weiterhin kann die Bedingung 3 festgelegt werden, aus der abgeleitet werden kann, ob dieser Zustand gerade aktiv ist - in der Regel wird der Zustand aus Prozesswerten abgeleitet. Beispielsweise wird der Zustand "Startup" in FIG 1 bei einer Bedingung "SFC/Start/OpDi01.Out", der Zustand "Shutdown" bei einer Bedingung "G05103/CFC_MonDiL/MonDiL.Out", der Zustand "Emergency" bei einer Bedingung "EC05403/CFC_MotSpdCL/lntlock.Out" und der Zustand "Complete Shutdown" bei einer Bedingung "Connectivity/Stop" aktiv.

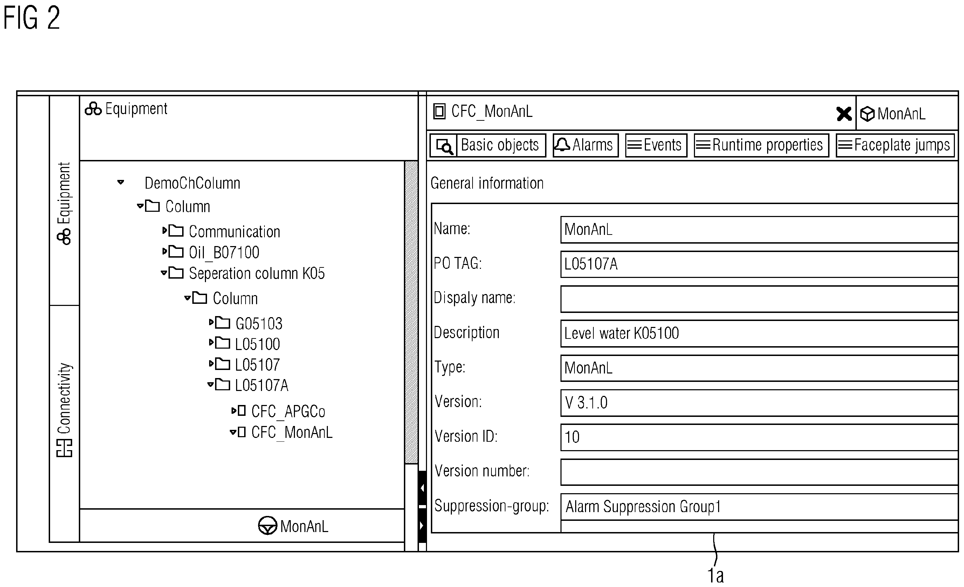

In einem zweiten Schritt findet, wie in FIG 2 dargestellt, die Zuordnung der Alarmunter-drückungsgruppen 1a, 1b (Suppression Gruoups) zu den Prozessobjekten statt, deren Alarme für eine Unterdrückung in einem bestimmten Anlagenzustand in Betracht kommen. FIG 2 zeigt die Zuordnung der Alarmunterdrückungsgruppe 1a zu einem Prozessobjekt "MonAnL", welches einen Wasserstand angibt.

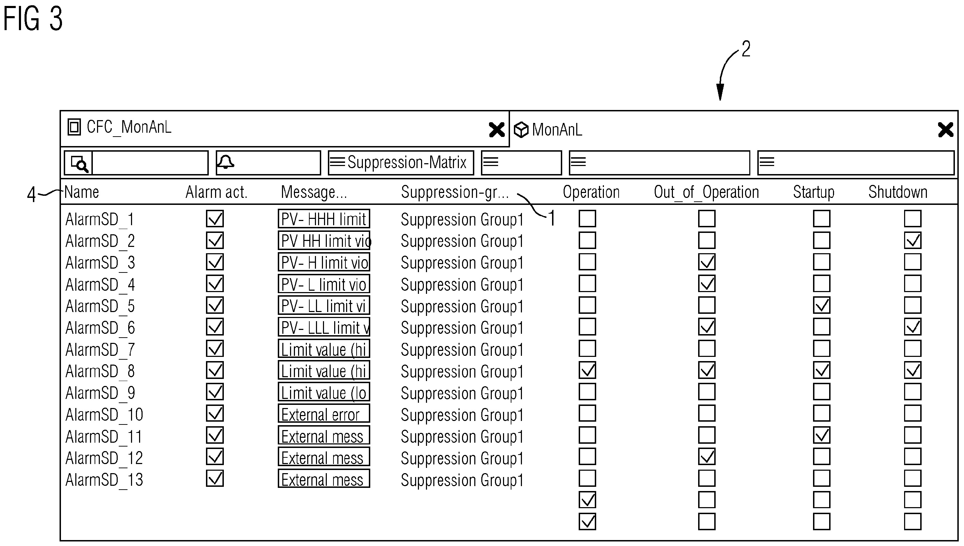

In einem nachfolgenden Schritt werden, wie in FIG 3 dargestellt, die spezifischen Alarme 4 des Prozessobjektes "MonAnL" festgelegt, die in einem bestimmten Anlagenzustand unterdrückt werden. Beispielsweise wird der Alarm "AlarmSD_2" des Prozessobjekt MonAnL unterdrückt, wenn der Anlagenzustand "Shutdown" erkannt wird, wobei der Anlagenzustand über den Prozesswert "OUT" von "MonAnl" ermittelt wird.

In der EP 2 092 499 B1 und in der EP 1 855 172 A1 sind Leitsysteme offenbart, die jeweils über ein Alarmmanagement verfügen. Mithilfe dieser Alarmmanagementmodule können Alarme von Komponenten technischer Anlagen unter anderem erfasst, visuell dargestellt und weiterverarbeitet werden.

Die EP 4 083 731 A1 offenbart ein Leitsystem mit einem computerimplementierten Alarmverwaltungsdienst.

Der Erfindung liegt die Aufgabe zugrunde, ein Leitsystem für eine technische Anlage anzugeben, welches die Effizienz und die Flexibilität einer Bedienung und Beobachtung der technischen Anlage erhöht.

Diese Aufgabe wird gelöst durch ein Leitsystem für eine technische Anlage, insbesondere Fertigungs- oder Prozessanlage, mit den Merkmalen des Anspruchs 1. Außerdem wird die Aufgabe gelöst durch ein Verfahren zum Betrieb einer technischen Anlage, insbesondere Fertigungs- oder Prozessanlage, gemäß Anspruch 10. Zudem wird die Aufgabe gelöst durch ein Verfarhen gemäß Anspruch 11. Vorteilhafte Weiterbildungen ergeben sich aus den abhängigen Ansprüchen.

Ein erfindungsgemäßes Leitsystem für eine technische Anlage, insbesondere Fertigungs- oder Prozessanlage, das ein computerimplementiertes Alarmsystem umfasst, welches zur Überwachung von technischen Objekten hinsichtlich vorgebbarer Kriterien und zur Erzeugung von Alarmmeldungen bezüglich der überwachten technischen Objekte ausgebildet ist, wobei in dem Alarmsystem von vorgebbar ist, dass ein technisches Objekt oder eine Mehrzahl von technischen Objekten beim Erfüllen von vorgegebenen Bedingungen für die Erzeugung der Alarmmeldungen ausgenommen werden, ist dadurch gekennzeichnet, dass es dazu ausgebildet ist, bei einem Erfüllen der vorgegebenen Bedingungen zusätzlich Dokumente, die in einem Zusammenhang mit dem von der erzeugten Alarmmeldung betroffenen technischen Objekt stehen und die für eine visuelle Darstellung für einen Operator des Leitsystems im Rahmen einer Bedienung und Beobachtung der technischen Anlage vorgesehen sind, von der Bedienung durch den Operator zur Laufzeit der technischen Anlage auszuschließen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem Leitsystem wird im vorliegenden Kontext ein computergestütztes, technisches System verstanden, das Funktionalitäten zum Darstellen, Bedienen und Leiten der technischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus kann das Leitsystem u.a. Mittel zur Visualisierung der verfahrenstechnischen Anlage und zu einem Engineering aufweisen. Das Leitsystem kann optional auch weitere Recheneinheiten für komplexere Regelungen und Systeme zur Datenspeicherung und -verarbeitung umfassen.

Das Leitsystem weist ein an sich bekanntes Alarmsystem auf, welches zur Erzeugung von Alarmmeldungen ausgebildet ist, die beim Vorliegen vorgebbarer Kriterien wie einer Über- oder Unterschreitung eines Schwellwertes erzeugt und einem Operator des Leitsystems dargeboten wird, insbesondere visuell und/oder akustisch. Wie zuvor anhand eines bekannten Alarmsystems erläutert, kann in dem Alarmsystem vorgegeben werden, dass ein oder mehrere technische Objekte für diese Erzeugung der Alarmmeldungen ausgenommen werden, wenn eine oder mehrere vorgegebene Bedingungen erfüllt sind. Dies kann, wie zuvor erläutert, beispielsweise dann sinnvoll sein, wenn ein Teil der technischen Anlage zu Wartungszwecken gerade nicht in Betrieb ist.

Das erfindungsgemäße Leitsystem weist eine im Gegensatz zum Stand der Technik verbesserte Bedienung und Beobachtung auf und berücksichtigt im Rahmen des selektiven Deaktivierens nicht nur die einzelnen Alarmmeldungen, sondern vielmehr zusätzlich auch Dokumente, die keine Alarmmeldungen darstellen, aber in einem Zusammenhang mit den technischen Objekten stehen, welche ursächlich für die erzeugten Alarmmeldungen sind. Bei diesen Dokumenten kann es sich um Anlagenbilder, visualisierte Schrittketten, visualisierte Ablaufpläne, Anwenderselektionen, Batchrezepte, Sicherheitspläne oder Detailansichten von technischen Objekten handeln. Wesentlich ist dabei, dass das technische Objekt, welches die Alarmmeldung oder die Alarmmeldungen verursacht, in einem Zusammenhang mit dem Dokument steht. Dies kann zum Beispiel bedeuten, dass eine visuelle Repräsentation des technischen Objektes Teil des Anlagenbildes, der (visualisierten) Schrittkette oder eines (visualisierten) Ablaufplans ist.

Das erfindungsgemäße Leitsystem beschränkt die selektive Deaktivierung demnach nicht auf Alarmmeldungen, sondern stellt ein ganzheitliches Konzept für die verschiedenen Aspekte der Bedienung und Beobachtung zur Verfügung. Hierdurch lassen sich die Darbietungen, insbesondere die visuellen, für den Operator im Rahmen des Bedienens und Beobachtens auf die für ihn wesentlichen Aspekte reduzieren, wodurch sich insgesamt die Effizienz und Zuverlässigkeit des Bedienens und Beobachtens steigern lässt.

Im Rahmen einer bevorzugten Weiterbildung der Erfindung ist das Leitsystem dazu ausgebildet, die Dokumente, die in einem Zusammenhang mit dem von der erzeugten Alarmmeldung betroffenen technischen Objekt stehen und die für eine visuelle Darstellung für einen Operator des Leitsystems im Rahmen einer Bedienung und Beobachtung der technischen Anlage vorgesehen sind, solange von der Bedienung durch den Operator zur Laufzeit der technischen Anlage auszuschließen, bis die vorgegebene oder vorgegebenen Bedingungen nicht mehr erfüllt sind. Mit anderen Worten ist die selektive Deaktivierung der Dokumente dabei nur so lange aktiv, wie die vorgegebene Bedingung oder die vorgegebenen Bedingungen erfüllt sind. Dadurch wird die selektive Deaktivierung nur so lange aktiviert, wie sie auch vonnöten ist.

Bevorzugt ist das Leitsystem dazu ausgebildet, im Rahmen einer Erzeugung einer Automatisierung für die technische Anlage von einem Projekteur Informationen zu empfangen, dahingehend, welche Dokumente von der Bedienung ausgeschlossen werden sollen. Der Projekteur kann demnach im Rahmen der Projektierung bzw. dem Engineering der technischen Anlage vorgeben, welche Dokumente für den Fall der Erfüllung der Bedingung oder der Bedingungen von der Bedienung ausgeschlossen werden sollen.

Die vorgegebene Bedingung oder die vorgegebenen Bedingungen können sich auf einen Zustand der technischen Anlage oder eines Teils der technischen Anlage beziehen. Ein solcher Zustand kann beispielsweise lauten: "Operation" (Betrieb), "Out_of_Operation" (Außer Betrieb), "Startup" (Anlauf), "Shutdown" (Abschaltung), "Product_change" (Produktwechsel), "Standby" (Warten), "Emergency" (Notfall) oder "Maintenance" (Wartung).

Besonders bevorzugt ist das Leitsystem dazu ausgebildet, zur Laufzeit der technischen Anlage von einem Operator des Leitsystems Informationen zu empfangen, dahingehend, welche Dokumente für den Fall der Erfüllung der Bedingung oder der Bedingungen von der Bedienung ausgeschlossen werden sollen. Der Operator kann dabei im Zuge der Bedienung und Beobachtung der technischen Anlage, also während die Anlage schon in Betrieb ist, die Dokumente und die Bedingung(en) für die selektive Deaktivierung vorgeben. Er kann demnach flexibel und dynamisch auf sich ändernde Rahmenbedingungen reagieren, um sein Bedienen und Beobachten zu verbessern.

Bevorzugt ist das Leitsystem dazu ausgebildet, die Dokumente, die von der Bedienung ausgeschlossen werden, in der visuellen Darstellung für den Operator durch einen veränderten Kontrast oder eine geänderte Farbgebung zu kennzeichnen, insbesondere durch ein Überdecken der visuellen Darstellung der Dokumente mit einem Grauschleier. Hierdurch erhält der Operator unmittelbar eine Information darüber, dass die Dokumente für die Bedienung gesperrt sind. Durch die Verwendung beispielsweise des Grauschleiers kann vorgesehen sein, dass der Operator die gekennzeichneten Dokumente noch beobachten, aber nicht bedienen kann. Dies kann unter Umständen für ihn vorteilhaft sein.

Es kann aber auch vorgesehen sein, dass die zusätzlichen Dokumente beim Erfüllen der vorgegebenen Bedingung oder Bedingungen auch von der Beobachtung durch den Operator zur Laufzeit der technischen Anlage ausgeschlossen werden. Dem Operator steht also weder ein Bedienen noch ein Beobachten der betroffenen Dokumente zur Verfügung.

Im Rahmen einer vorteilhaften Weiterbildung der Erfindung umfasst das Leitsystem einen Engineering Station Server zur Erzeugung der Automatisierung für die technische Anlage, einen Operator Station Server zur Erzeugung einer visuellen Darstellung für die Bedienung und Beobachtung der technischen Anlage und einen Operator Station Client zur visuellen Darstellung der Bedienung und Beobachtung, wobei das Alarmsystem auf dem Operator Station Server implementiert ist.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungs-systemen der technischen Anlage her und gibt Daten der technischen Anlage an sogenannte Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Es wird davon ausgegangen, dass der Operator Station Server wenigstens eine Software-Komponente umfasst, die für eine Zeitdauer eines in der Software-Komponente auftretenden Fehlers einen Alarm mit einem bestimmten Schweregrad erzeugen kann. Eine solche Software-Komponente kann beispielsweise ein Prozessabbilddienst, ein Visualisierungsdienst, ein Archivdienst oder ein Kommunikationsdienst sein, die auf dem Operator Station Server implementiert sind und verschiedene Funktionalitäten im Rahmen der Bedienung und Beobachtung der technischen Anlage bereitstellen.

Ein Fehler wird vorliegend allgemein als eine Abweichung eines Ist-Zustandes der Software-Komponente von einem Soll-Zustand der Software-Komponente verstanden.

Der von dem Alarmsystem erzeugte Alarm wird über eine bestimmte Zeitdauer hinweg ausgegeben und weist in der Regel einen bestimmten Schweregrad auf. Dadurch informiert der Alarm über das Vorliegen des Fehlers, über die Zeitdauer des Auftretens des Fehlers und über den Schweregrad des Fehlers.

Die zuvor formulierte Aufgabe wird zudem gelöst durch ein Verfahren zum Betrieb einer technischen Anlage, insbesondere Fertigungs- oder Prozessanlage, mit einem Leitsystem, welches wie zuvor erläutert ausgebildet ist.

Die zuvor formulierte Aufgabe wird zudem gelöst durch ein Verfahren, umfassend die folgenden Schritte:
a) Durch ein computerimplementiertes Alarmsystem (31) eines Leitsystems (11) für eine technische Anlage, insbesondere Prozess- oder Fertigungsanlage, Überwachung von technischen Objekten (25) hinsichtlich vorgebbarer Kriterien und Erzeugung von Alarmmeldungen bezüglich der überwachten technischen Objekte (25), wenn die vorgebbaren Kriterien vorliegen,
b) Vorgeben in dem Alarmsystem (31), dass ein technisches Objekt (25) oder eine Mehrzahl von technischen Objekten (25) beim Erfüllen einer oder mehrerer vorgegebener Bedingungen für die Erzeugung der Alarmmeldungen ausgenommen werden,
c) Bei einem Erfüllen der einen oder mehreren vorgegebenen Bedingungen, zusätzliche Ausschließen von Dokumenten, die in einem Zusammenhang mit dem von der erzeugten

Alarmmeldung betroffenen technischen Objekt (25) stehen und die für eine visuelle Darstellung für einen Operator des Leitsystems (11) im Rahmen einer Bedienung und Beobachtung der technischen Anlage vorgesehen sind, von der Bedienung durch den Operator zur Laufzeit der technischen Anlage.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 4: eine Projektierung eines Anlagenbildes einer Prozessanlage;
- FIG 5: eine visuelle Darstellung des Anlagenbildes gemäß einem ersten Aspekt;
- FIG 6: eine visuelle Darstellung des Anlagenbildes gemäß einem zweiten Aspekt;
- FIG 7: eine visuelle Darstellung des Anlagenbildes gemäß einem dritten Aspekt; und
- FIG 8: ein Leitsystem in einer schematischen Darstellung.

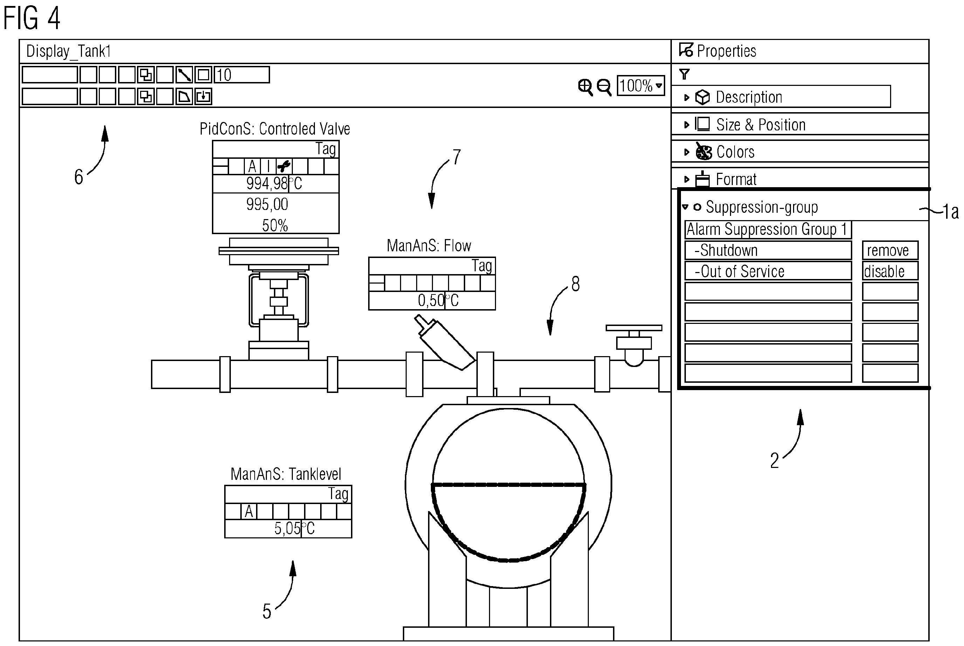

In FIG 4 ist die Projektierung eines Anlagenbildes 5 dargestellt, welche ein Projekteur einer als Prozessanlage ausgebildeten technischen Anlage unter Nutzung eines hierfür ausgebildeten computerimplementierten Projektierungswerkzeuges 6 vornimmt. Das Anlagenbild 5 umfasst eine visuelle Darstellung 7 eines ersten technischen Objektes (eines Ventils) und die visuelle Darstellung 8 eines zweiten technischen Objektes (eines Tanks). In einem rechten Teil des Projektierungswerkzeuges kann der Projekteur festlegen, dass Eigenschaften des Anlagen-bildes 5 auch die unterschiedlichen Anlagenzustände 2 von zuvor festgelegten Alarm-unterdrückungsgruppen 1a mitberücksichtigt werden.

In diesem Ausführungsbeispiel wurde Folgendes festgelegt:
- Falls der Anlagenzustand 2 "Shutdown" der Alarmunterdrückungsgruppe 1a erkannt wird, wird das Anlagenbild 5 gänzlich aus der Bedienung und Beobachtung genommen (remove) - d.h. dieses Anlagenbild 5 kann, solange der Zustand "Shutdown" ansteht, weder geöffnet werden, noch wird es in der Anlagenbildhierarchie angeboten, noch trägt es zu einer Gruppen-alarmbildung in einer Anlagenbildhierarchie bei.

Falls der Anlagenzustand 2 "Out Of Service" der Alarmunterdrückungsgruppe 1a erkannt wird, soll das Anlagenbild 5 eingeschränkt in der Bedienung und Beobachtung angeboten werden - d.h. dieses Anlagenbild 5 kann, solange der Anlagenzustand 2 "Out Of Service" ansteht, zwar geöffnet und beobachtet, jedoch nicht bedient werden. Das Anlagenbild 5 wird mit einem Grauschleier überzogen, um diesen Zustand grafisch darzustellen. Weiterhin wird das Anlagenbild 5 zwar in der Anlagenbildhierarchie angeboten, jedoch trägt sein Gruppenalarm nicht zur Veroderung der übergeordneten Gruppenalarme bei.

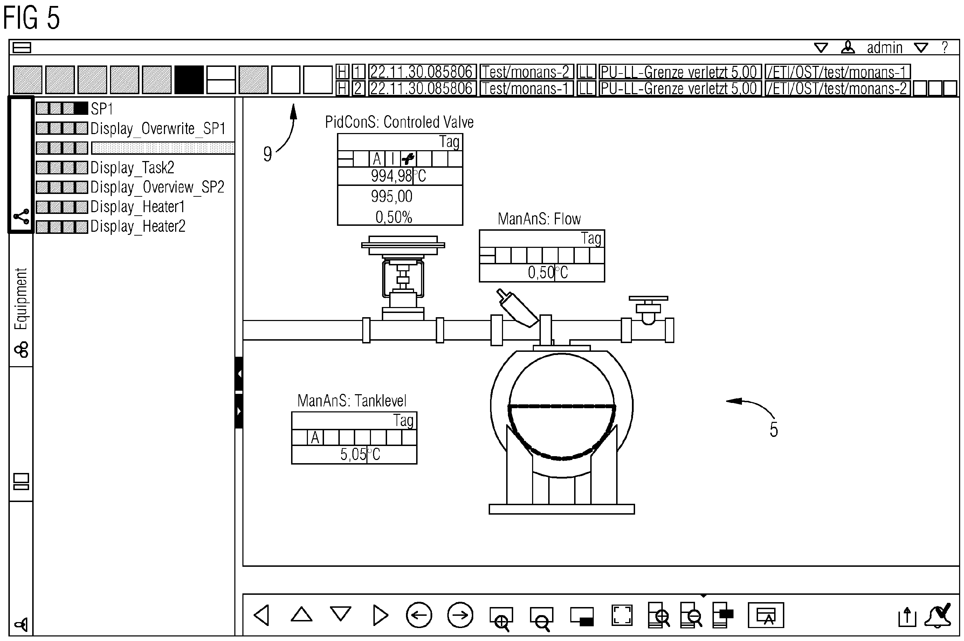

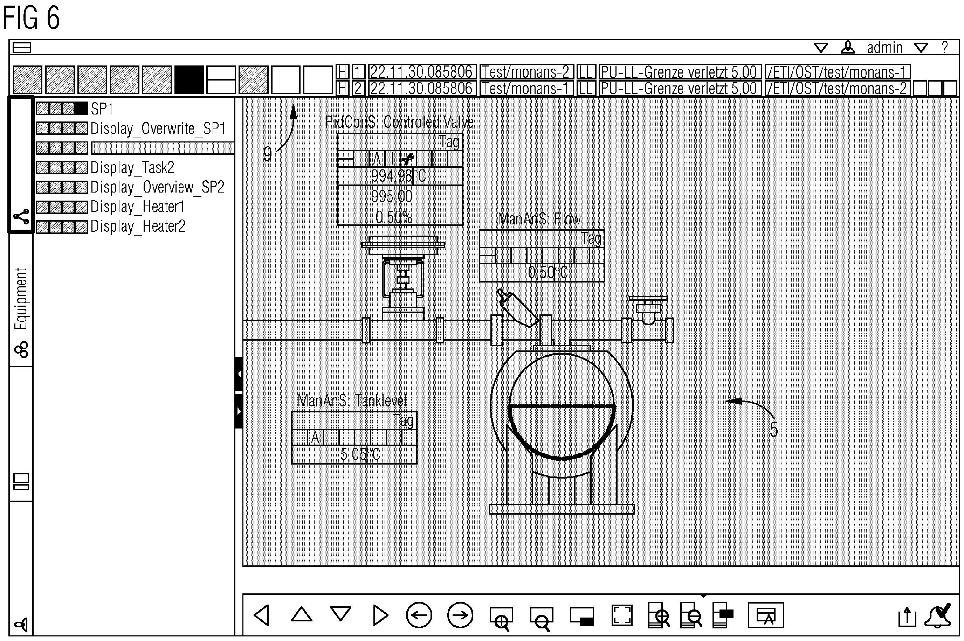

FIG 5 zeigt eine visuelle Darbietung des zuvor projektierten Anlagenbildes 5 in einem computerimplementierten Werkzeug 9 zum Bedienen und Beobachten der Prozessanlage. Hierbei ist der Zustand dargestellt, dass keiner der zu berücksichtigenden Anlagenzustände 2 ansteht, es liegt also ein Normalbetrieb der Prozessanlage vor. FIG 6 zeigt dasselbe Anlagenbild 5 mit einem übergezogenen Grauschleier, da zu diesem Zeitpunkt der Anlagenzustand "Out of Service" (vgl. FIG 4) erkannt wurde. Das Anlagenbild 5 ist hierbei weiterhin beeobachtbar, aber nicht bedienbar. Weiterhin wird der Gruppenalarm des Anlagenbildes 5 nicht verodert - d.h. sein Alarmzustand trägt nicht zur Veroderung bei der Gruppenalarmbildung bei.

Die selektive Deaktivierung kann nicht nur auf Anlagenbilder, sondern auch auf weitere Dokumente angewandt werden, wie z.B.
- Visualisierte Schrittketten (SFC Visu), die beispielsweise aus der technologischen Hierarchie oder aus Anlagenbildern heraus geöffnet werden können
- Visualisierte Ablaufpläne (CFC Visu), die beispielsweise aus der technologischen Hierarchie oder aus Anlagenbildern heraus geöffnet werden können
- Anwenderselektionen - diese werden nach der Erstellung zur Laufzeit mit den Alarmunterdrückungsgruppen assoziiert
- Batch Rezepte, die beispielsweise aus der technologischen Hierarchie oder aus Anlagenbildern heraus geöffnet werden können
- Prozesssicherheitspläne, die beispielsweise aus der technologischen Hierarchie oder aus Anlagenbildern heraus geöffnet werden können
- Detailansichten von Prozessobjekten.

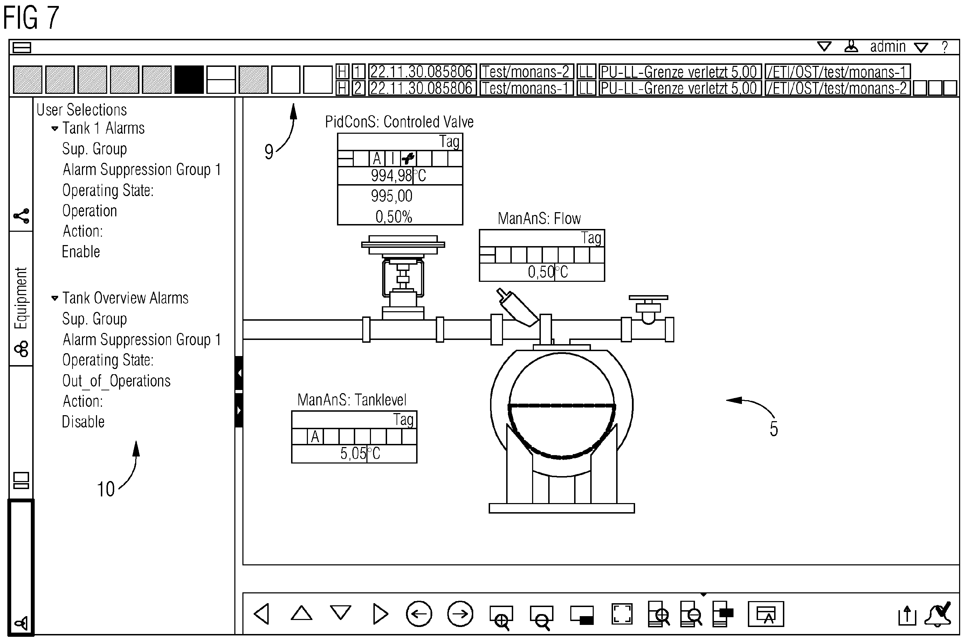

In FIG 7 ist dargestellt, dass auch zur Laufzeit erstellte Anwenderselektionen 10 (User Selections) mit dem Anlagenzustand assoziiert werden können. Die Anwenderselektionen 10 können ebenfalls zur Laufzeit mit den in der Projektierung konfigurierten Alarmunter-drückungsgruppen 1a, 1b und den jeweiligen Anlagenzuständen 2 assoziiert werden. Im vorliegenden Ausführungsbeispiel hat der Operator entschieden, die Anwenderselektion "Tank 1 Alarms" für eine Meldefolgeanzeige nur dann anzubieten ("enable"), falls der Anlagenzustand 2 "Operation" ist. Im Gegensatz hierzu soll die Anwenderselektion "Tank Overview Alarms" immer angeboten werden, außer wenn die Anlage im Zustand "Out_of_Operations" ist.

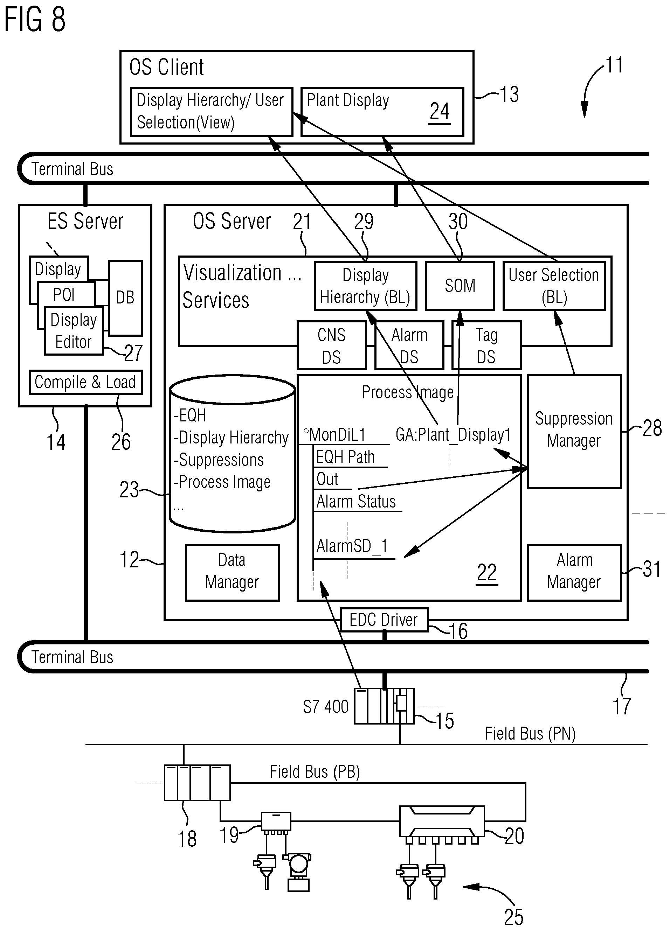

In FIG 8 ist ein erfindungsgemäßes Leitsystem 11 für eine Prozessanlage schematisch dargestellt. Das Leitsystem 11 weist einen Operator Station Server 12, einen Operator Station Client 13, einen Engineering Station Server 14 und ein Automatisierungsgerät 15 auf. Der Operator Station Server 12 weist eine Geräteschnittstelle 16 auf, die mit einem Anlagenbus 17 verbunden ist. Über diese Geräteschnittstelle 16 ist der Operator Station Server 12 mit dem Automatisierungsgerät 15 sowie mit weiteren Komponenten der Prozessanlage wie Peripheriegeräten 17, 18, 19 verbunden und kann mit diesen kommunizieren. Der Anlagenbus 17 kann, ohne sich darauf zu beschränken, beispielsweise als Industrial Ethernet ausgebildet sein.

Auf dem Operator Station Server 12 sind (unter anderem) ein Visualisierungsdienst ("Visualization Services") 21, ein Prozessabbild ("Process Image") 22 und ein Konfigurationsspeicher 23 ("Config") implementiert. Der in dem Operator Station Server 12 integrierte Visualisierungsdienst 21 initiiert eine Übertragung von Visualisierungsinformationen an den Operator Station Client 13. Der Operator Station Client 13 ist dazu ausgebildet, eine Visualisierung, d.h. eine grafische Darbietung 24, insbesondere von Anlagenbildern ("Plant Display"), Messwerteverläufen, Bedienelementen und vergleichbaren Elementen, zum Bedienen und Beobachten der Prozessanlage darzustellen.

In dem Prozessabbild 22 des Operator Station Servers 12 ist eine Momentaufnahme der (Signal-)Zustände von mit dem Operator Station Server 12 verbundenen Geräten 25 und/oder Applikationen hinterlegt. Diese werden im vorliegenden Ausführungsbeispiel von dem Automatisierungsgerät 15 an den Operator Station Server 12 übertragen.

Auf dem Operator Station Server 12 ist weiterhin ein Alarmdienst 31 ("Alarm Manager") implementiert, welcher in Verbindung mit dem Automatisierungsgerät 15 ein Alarmsystem bildet, welches zur Überwachung der Prozessobjekte 25 hinsichtlich vorgebbarer Kriterien und zur Erzeugung von Alarmmeldungen bezüglich der überwachten Prozessobjekte 25 ausgebildet ist. Nach Fertigstellung einer Automatisierung für die Prozessanlage durch einen Projekteur werden die Automatisierungsdaten durch einen Kompilierungsdienst 26 ("Compile & Load") des Engineering Station Servers 14 in ein für das Automatisierungsgerät 15 und den Operator Station Server 12 verständliches Datenformat gebracht und an die beiden Geräte übertragen. Der für die Bedienung und Beobachtung der Prozessanlage vorgesehene Teil der Automatisierungsdaten wird in dem Konfigurationsspeicher 23 des Operator Station Servers 12 hinterlegt. Der das Automatisierungsgerät 15 betreffende Teil wird entsprechend in einem Datenspeicher des Automatisierungsgerätes 15 hinterlegt.

Wie anhand der Figuren 4 bis 7 beschrieben, wird ein Anlagenbildeditor 27 (bei anderen Typen von Dokumenten auch die jeweiligen Editoren) des Engineering Station Servers 14 so erweitert, dass bei der selektiven Deaktivierung auch die Visualisierung der jeweiligen Anlagenzustände mitberücksichtigt werden können. Im Gruppenalarm ("GA: Plant_Display1 ") des Anlagenbildes wird die Abhängigkeit des Anlagenbildes zu einem Anlagenzustand aus der Alarmunterdrückungsgruppe so hinterlegt, so dass ein auf dem Operator Station Server 12 implementierter Unterdrückungsdienst 28 ("Suppression Manager" bei Erkennung eines relevanten Anlagenzustandes die jeweils konfigurierte Folge ("remove", "disable" ...) eintragen kann, die dann wiederum von dem auf dem Operator Station Server 12 implementierten Anlagenbildhierarchiedienst 29 ("Display Hierarchy") bei der Navigation und Gruppenalarmbildung und einem auf dem Operator Station Server 12 implementierten Anlagenbilddienst 30 ("SOM") bei der Darstellung des Anlagenbildes berücksichtigt wird.

Wie beschrieben, werden auch die Software-Komponenten der Anwenderselektionen erweitert, so dass spezifisch für Anwenderselektion zu Anwenderselektion typübergreifend festgelegt werden kann, für welche Anlagenzustände diese angeboten oder vorbehalten werden sollen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitsystem (11) für eine technische Anlage, insbesondere Fertigungs- oder Prozessanlage, das ein computerimplementiertes Alarmsystem (31) umfasst, welches zur Überwachung von technischen Objekten (25) hinsichtlich vorgebbarer Kriterien und zur Erzeugung von Alarmmeldungen bezüglich der überwachten technischen Objekte (25) ausgebildet ist, wobei in dem Alarmsystem (31) vorgebbar ist, dass ein technisches Objekt (25) oder eine Mehrzahl von technischen Objekten (25) beim Erfüllen einer oder mehrerer vorgegebener Bedingungen für die Erzeugung der Alarmmeldungen ausgenommen werden,
**dadurch gekennzeichnet, dass**
das Leitsystem (11) dazu ausgebildet ist, bei einem Erfüllen der einen oder mehreren vorgegebenen Bedingungen zusätzlich Dokumente, die in einem Zusammenhang mit dem von der erzeugten Alarmmeldung betroffenen technischen Objekt (25) stehen und die für eine visuelle Darstellung für einen Operator des Leitsystems (11) im Rahmen einer Bedienung und Beobachtung der technischen Anlage vorgesehen sind, von der Bedienung durch den Operator zur Laufzeit der technischen Anlage auszuschließen.

2. Leitsystem (11) nach Anspruch 1, das dazu ausgebildet ist, die Dokumente, die in einem Zusammenhang mit dem von der erzeugten Alarmmeldung betroffenen technischen Objekt (25) stehen und die für eine visuelle Darstellung für einen Operator des Leitsystems (11) im Rahmen einer Bedienung und Beobachtung der technischen Anlage vorgesehen sind, solange von der Bedienung durch den Operator zur Laufzeit der technischen Anlage auszuschließen, bis die vorgegebene oder vorgegebenen Bedingungen nicht mehr erfüllt sind.

3. Leitsystem (11) nach Anspruch 1 oder 2, das dazu ausgebildet ist, im Rahmen einer Erzeugung einer Automatisierung für die technische Anlage von einem Projekteur Informationen zu empfangen, dahingehend, welche Dokumente für den Fall der Erfüllung der Bedingung oder der Bedingungen von der Bedienung ausgeschlossen werden sollen.

4. Leitsystem (11) nach einem der vorangegangenen Ansprüche, bei dem sich die vorgegebene Bedingung oder die vorgegebenen Bedingungen auf einen Zustand der technischen Anlage oder eines Teils der technischen Anlage beziehen.

5. Leitsystem (11) nach einem der vorangegangenen Ansprüche, das dazu ausgebildet ist, zur Laufzeit der technischen Anlage von einem Operator des Leitsystems (11) Informationen zu empfangen, dahingehend, welche Dokumente für den Fall der Erfüllung der Bedingung oder der Bedingungen von der Bedienung ausgeschlossen werden sollen.

6. Leitsystem (11) nach einem der vorangegangenen Ansprüche, das dazu ausgebildet ist, die Dokumente, die von der Bedienung ausgeschlossen werden, in der visuellen Darstellung für den Operator durch einen veränderten Kontrast oder eine geänderte Farbgebung zu kennzeichnen, insbesondere durch ein Überdecken der visuellen Darstellung der Dokumente mit einem Grauschleier.

7. Leitsystem (11) nach einem der vorangegangenen Ansprüche, das dazu ausgebildet ist, die zusätzlichen Dokumente beim Erfüllen der vorgegebenen Bedingung oder Bedingungen auch von der Beobachtung durch den Operator zur Laufzeit der technischen Anlage auszuschließen.

8. Leitsystem (11) nach einem der vorangegangenen Ansprüche, bei dem die Dokumente Anlagenbilder (5), visualisierte Schrittketten, visualisierte Ablaufpläne, Anwenderselektionen (10), Batchrezepte, Sicherheitspläne oder Detailansichten von technischen Objekten darstellen.

9. Leitsystem (11) nach einem der vorangegangenen Ansprüche, welches einen Engineering Station Server (14) zur Erzeugung der Automatisierung für die technische Anlage, einen Operator Station Server (12) zur Erzeugung einer visuellen Darstellung für die Bedienung und Beobachtung der technischen Anlage und einen Operator Station Client (13) zur visuellen Darstellung der Bedienung und Beobachtung umfasst, wobei das Alarmsystem (31) wenigstens teilweise auf dem Operator Station Server (12) implementiert ist.

10. Verfahren zum Betrieb einer technischen Anlage, insbesondere Fertigungs- oder Prozessanlage, mit einem Leitsystem (11) nach einem der Ansprüche 1 bis 9.

11. Verfahren, umfassend die folgenden Schritte:
a) Durch ein computerimplementiertes Alarmsystem (31) eines Leitsystems (11) für eine technische Anlage, insbesondere Prozess- oder Fertigungsanlage, Überwachung von technischen Objekten (25) hinsichtlich vorgebbarer Kriterien und Erzeugung von Alarmmeldungen bezüglich der überwachten technischen Objekte (25), wenn die vorgebbaren Kriterien vorliegen,
b) Vorgeben in dem Alarmsystem (31), dass ein technisches Objekt (25) oder eine Mehrzahl von technischen Objekten (25) beim Erfüllen einer oder mehrerer vorgegebener Bedingungen für die Erzeugung der Alarmmeldungen ausgenommen werden,
c) Bei einem Erfüllen der einen oder mehreren vorgegebenen Bedingungen, zusätzliche Ausschließen von Dokumenten, die in einem Zusammenhang mit dem von der erzeugten Alarmmeldung betroffenen technischen Objekt (25) stehen und die für eine visuelle Darstellung für einen Operator des Leitsystems (11) im Rahmen einer Bedienung und Beobachtung der technischen Anlage vorgesehen sind, von der Bedienung durch den Operator zur Laufzeit der technischen Anlage.
